# EUROPEAN PATENT SPECIFICATION

(11) **EP 2 043 939 B1**
(45) Date of publication and mention of the grant of the patent: **25.06.2014**
(21) Application number: 07748741.1
(22) Date of filing: 02.07.2007
(51) Int. Cl.: B66C 1/10, B66C 1/66

(54) **DETECTION FRAME FOR A LIFTING DEVICE**
ERFASSUNGSRAHMEN FÜR EINE HUBVORRICHTUNG
CADRE DE DÉTECTION POUR DISPOSITIF DE LEVAGE

(30) Priority: 05.07.2006 SG 200604460
(43) Date of publication of application: 08.04.2009
(73) Proprietor: NSL Engineering Pte Ltd, Singapore 628051 (SG)
(72) Inventor: MILLS, Robert, Arthur, Lancashire PR7 6FH (GB)
(74) Representative: Fleck, Barbara
(86) International application number: PCT/SG2007/000196
(87) International publication number: WO 2008/004985

(56) References cited:
- WO-A1-01/62657
- WO-A1-2006/071227
- WO-A2-2004/111683
- WO-A2-2004/111683
- US-A1- 2003 201 394
- US-A1- 2003 201 394
- US-B1- 6 768 421

## Description

### Field of Invention

The invention relates to a frame for supporting a detection system whilst said frame is attached to a spreader for lifting containers. The detection system may be used with said spreaders for detecting anomalies within said container. An example of said spreaders includes, but is not limited to, spreaders for engaging shipping containers, with an example of a detection system including apparatus for detecting the presence of fissile or radioactive material.

### Background

A system to detect fissile material within a container is disclosed in US Patent No. 6,768,421. Here, a spreader has been adapted to include detection apparatus for detecting radioactive material or potentially radioactive shielding material within the container.

This type of arrangement has several drawbacks. Firstly, to maintain control of the spreader, and still operate as quickly as possible, spreaders can be complex devices. This complexity suggests a conflict of purpose, whereby the ideal location for the detection equipment will be compromised. Alternatively, such a spreader will need to be substantially modified in order to accommodate the detection system, leading to costly redesign. Secondly, maintenance of the detection equipment will lead to downtime of the spreader. Whilst it would be preferable to investigate every container, it is still necessary to maintain the flow rate of containers through a port. It follows that downtime of a spreader can lead to a significant delay and consequent financial loss whilst the spreader is unavailable, not for any in the spreader, but due to a fault with the detection system.

An alternative arrangement is shown in US Patent No. 6,998,617. Here the detection equipment is mounted to a frame which is placed intermediate the spreader and the container. To ensure a correct alignment position of the detection equipment, the frame is mounted to the container using twist-locks on bottom legs of each corner of the frame, with the spreader mounted to these legs in an upper portion, again, using twist-locks. Thus the spreader is indirectly mounted to the container through the intermediate detection frame.

The length of the connection between a spreader and an engaged container is factored into the design of the spreader so as to avoid damage to the spreader and container should an unforeseen force be applied. The use of an intermediate frame between the spreader and container will increase this length, and consequently increase the lever arm associated with this connection, by up to factor of 2.

By doubling the length, the applied moment will also double, increasing the chance of damaging the twist-lock connection. Further, the "flipper" at each corner of the spreader, which is designed to apply a specified load in order to locate the spreader onto the container, relies upon the lever arm between the point of rotation and the engagement corner of the container. By doubling the connection length, the lever arm is also doubled and therefore halving the applied force of the flipper used to locate the spreader upon the container, thus reducing the effectiveness of the flipper.

In any event, in order to use a flipper upon a container with the intermediate detection frame in place requires a modification of the spreader to use a longer flipper. This returns, of course, to the original problem of having to modify the spreader, albeit only cosmetically. Further, a spreader having modified flippers cannot easily be used upon a container without the intermediate frame being present.

WO2004/111683 discloses an apparatus and system for detecting items, such as weapons of mass destruction, in cargo shipping containers or other types of containers. US20030108150 discloses a device for contactless cargo load control for shipping container crane installations, by x-raying the containers in the course of loading and unloading of transport vehicles.

### Summary of Invention

It is an object of the present invention to provide a means of supporting detection apparatus minimizing the problems of the prior art.

In a first aspect, the invention provides a frame for supporting a detection system whilst said frame is attached to a spreader, for lifting container, the frame comprising attachment brackets for attaching the frame to the spreader and at least one mounting bracket for mounting the detection system to the frame, characterized in that the frame is not in contact with the container whilst mounted to the spreader, and wherein the frame is suspended from the spreader.

The arrangement of the invention provides several benefits. As the frame is not in contact with the container, it therefore does not require a coupling arrangement that may raise the height of the spreader/frame assembly. Therefore, flippers used for standard spreaders may be used without modification, leading to better performance of the flipper and a reduced lever arm of the twist lock engagement compared with the prior art.

In a preferred embodiment, the frame may be releasably mounted to the spreader, so that the frame can be removed or replaced. This allows either the spreader or the detection system to undergo maintenance without affecting the other component.

In a preferred embodiment, the frame may be adapted to fit wholly within a void defined by the spreader and the container. In some cases, the spreader and container may define a void, with the spreader forming an upper boundary and the container defining a lower boundary. In this embodiment, the frame may fit wholly within this void so as not to project outside the void and potentially interfere with extraneous objects.

In a more preferred embodiment, the points of connection between the spreader and container may include columns or stanchions attaching between corners of the spreader and corners of the container, and so, together with the spreader and container define a "cage" arrangement. Such an example may include a spreader lifting a shipping container, with the twist lock portions projecting from the spreader to corners of the shipping container. In this preferred embodiment, the frame may not only be wholly within the void, but may also be wholly within the "cage" defined by the corner twist lock arrangements.

In a preferred embodiment, the frame may also include a plurality of support brackets longitudinally along said frame. These support brackets may provide means to attach the frame to the spreader, and so support the length of the frame from the spreader. Such support brackets may include simple points of attachment, or extend to actual hangers which are adapted to bolt, weld or otherwise engage the spreader so as to provide the requisite support.

In a preferred embodiment, the frame may be attached to the spreader, with the attachment brackets including connectability to hangers or other support members such that frame is suspended from the spreader. Alternatively, the frame may be attached to vertically extending portions of the spreader, with the attachment brackets located at extreme ends of the frame.

In a more preferred embodiment, the frame may be mounted adjacent extreme opposed ends of spreader. Thus, so as to fully span the length of the spreader, it may be advantageous for the attachment brackets to attach to extreme ends of the spreader, whether the attachment is through vertically extending members of the spreader or through an arrangement of hangers so as to suspend the frame.

In some instances, the frame may need to be attached to a spreader which is adapted to lift container of variable size, or multiple versions. One such example is disclosed in WO2001/062657. Disclosed is a spreader for lifting multiple containers, end to end. The spreader in this case is longitudinally extendable for lifting two 20 foot containers, or a single 40 foot container, or contract so as to be used with a single 20 foot container. A frame according to one embodiment of the invention may be longitudinally adjustable to also accommodate this extension or contraction. In a more preferred embodiment, the frame may be selectively extendable or contractible, such that the frame automatically follows the extension/contraction of the spreader to which it is attached.

An alternative arrangement is disclosed in WO 2005/090223. Here is disclosed a spreader, in this case a thin spreader assembly whereby the spreaders are laterally separable so as to accommodate a single or double container, side by side. In a preferred embodiment, the frame may also be laterally extendable so as to accommodate the lateral extension/contraction of the spreader to which it is attached.

In a preferred embodiment, the frame may comprise two or more parallel arms connected through at least one lateral connection member. The lateral connection member may be a platform which may further serve to support detection equipment. In a further embodiment there may be a plurality of lateral connection members divided into categories of simple members to connect the parallel arms to platforms or purpose built members for supporting aspects of the detection system.

In a further preferred embodiment, the arms may include means for extending said arms so as to accommodate the aforementioned extendability of the frame. For instance in one embodiment, the arms may be telescopic, i.e. having one or more segments nested within a fixed arm. Alternatively the arms may include one or more extending arm portions placed parallel to a fixed portion. To extend the frame the moving portions may slide along one face of the fixed arm.

In a further embodiment the arms may be constructed from open channel sections or other open sections. Further, the arms may have the open sections facing upwards. This may provide a further advantage in accommodating cabling or other components of the detection system.

The various means of constructing the frame and also the means for attaching it to the spreader will be a matter of routine for the skilled addressee and may include any one or a combination of a bolted connections, welded connections, shear pins etc.

In a second aspect the invention provides a container detection assembly comprising a spreader for engaging and lifting container, a frame for supporting a detection system, said frame attached to the spreader so as to be not in contact with the container.

### Brief Description of Drawings

It will be convenient to further describe the present invention with respect to the accompanying drawings that illustrate possible arrangements of the invention. Other arrangements of the invention are possible and consequently the particularity of the accompanying drawings is not to be understood as superseding the generality of the preceding description of the invention.
Figure 1 is an isometric view of a spreader mounted to a shipping container and having a frame according to one embodiment of the present invention;
Figure 2 is an elevation view of the spreader mounted to a shipping container as shown in Figure 1;
Figure 3 is an isometric view of a frame according to a second embodiment of the present invention;
Figure 4 is a plan view of the frame shown in Figure 3;

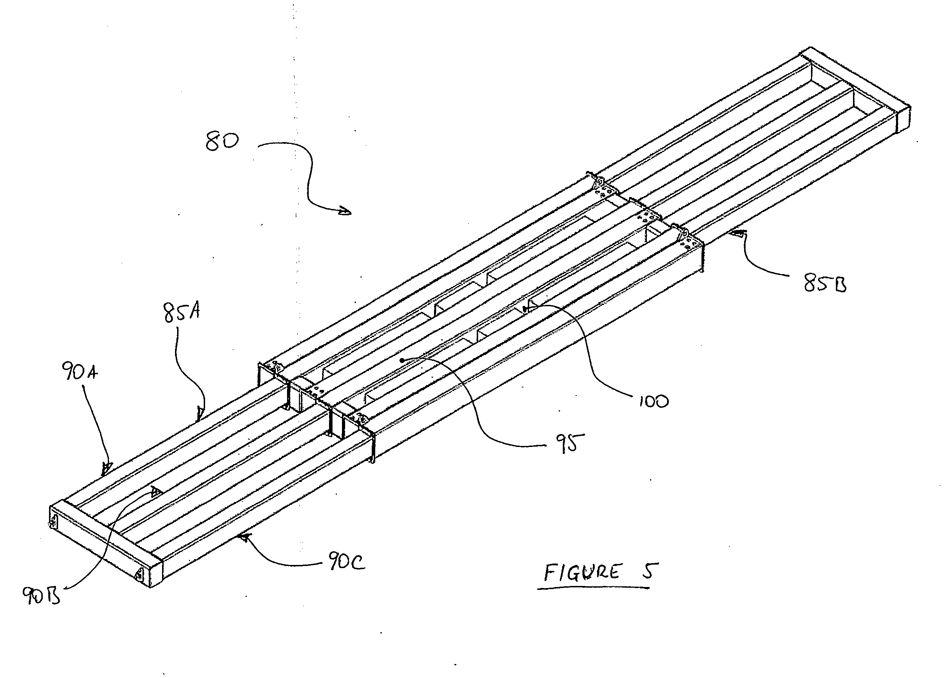

Figure 5 is an isometric view of a frame according to a third embodiment of the present invention, and;

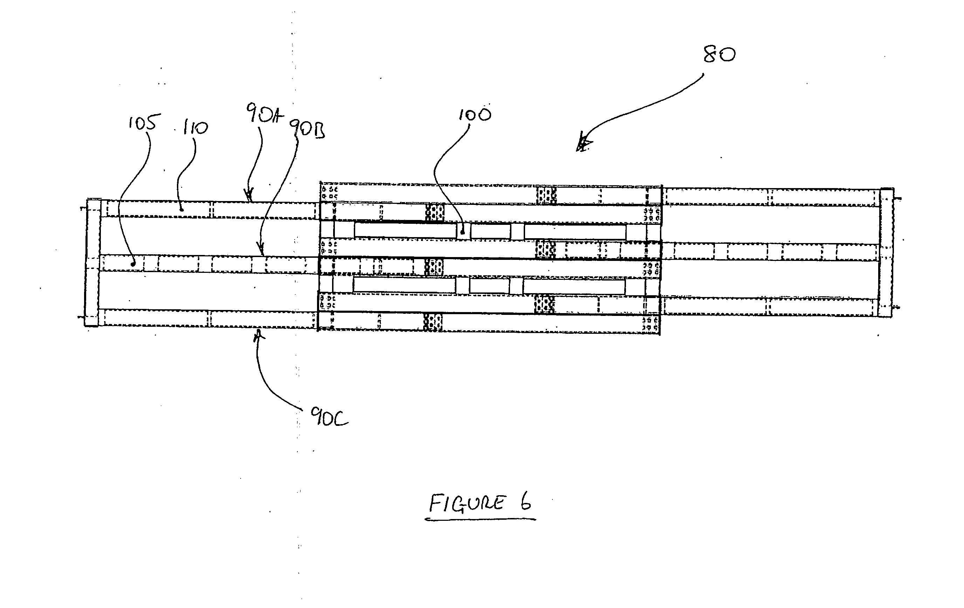

Figure 6 is a plan view of the frame shown in Figure 5.

### Description of Preferred Embodiment

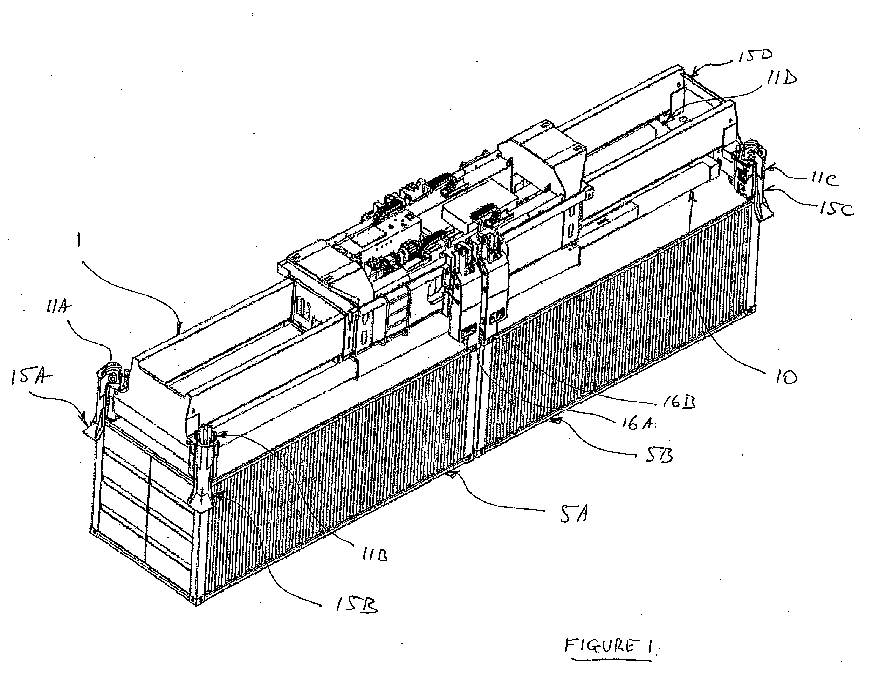

Figure 1 shows a spreader 1 engaged with a pair of containers 5A and 5B placed end to end. The spreader 1 engages the containers 5A and 5B at extreme corners 11A to D and internally at the internal corners of the containers 5A and 5B, each through twist-lock engagements. It will be appreciated that the following description is equally applicable to spreaders having engagement with single containers, and in fact, applicable to other types of container spreaders.

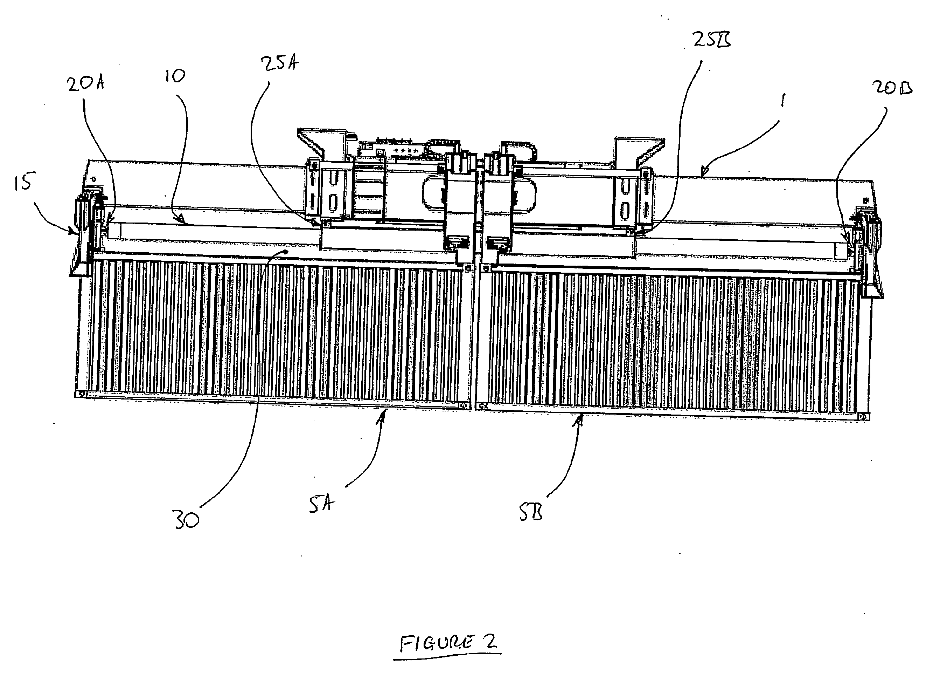

Mounted to the spreader 1 is a frame 10. As shown in Figure 2, the frame 10 is mounted within a void 30 defined by a "cage" formed from the spreader 1 above, containers 5A and 5B below, and the twist-lock engagements 15A to D and 16A and B. Thus the frame 10 lies wholly within the void in spaced relation from the containers 5A and 5B so as, firstly, not to interfere with any extraneous object and further to not interfere with the connection between the spreader 1 and the containers 5A and 5B. Thus it will be seen that because the frame 10 is placed in position so as not to interfere with the connection between spreader 1 and containers 5A and 5B, the flippers 15 at each corner of the spreader can be of a conventional type and not overly elongate to accommodate the inclusion of an intermediate frame.

The frame 10 is therefore mounted to the spreader at extreme ends 20A and 20B and is further supported at intermediate points 25A and 25B so as to support the weight of the frame. This has both a structural and serviceability benefit in case the weight of the frame 10, and any load it may be carrying, do not lead to an excessive deflection of the frame along its length.

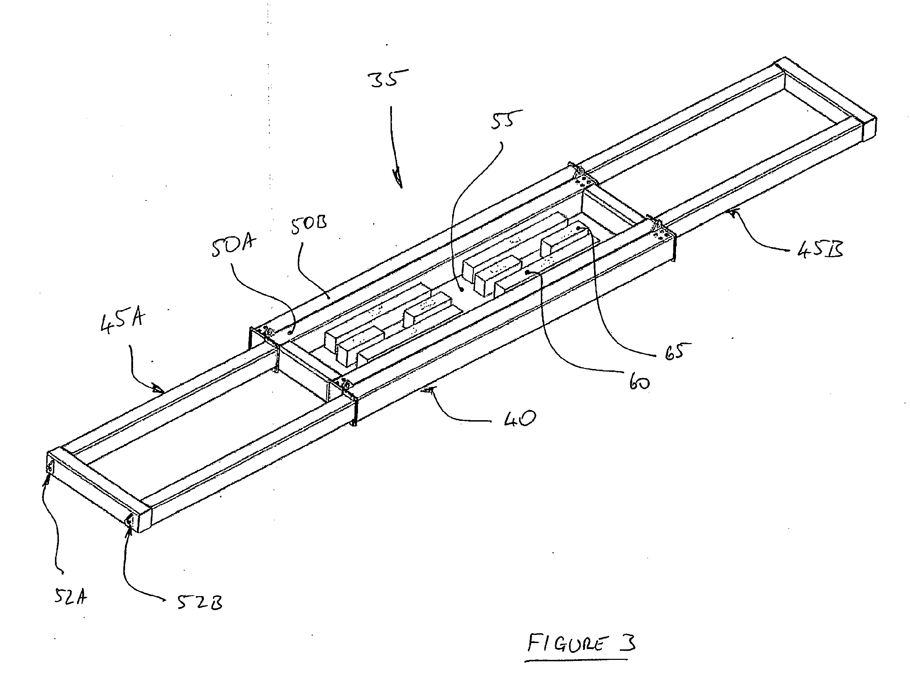

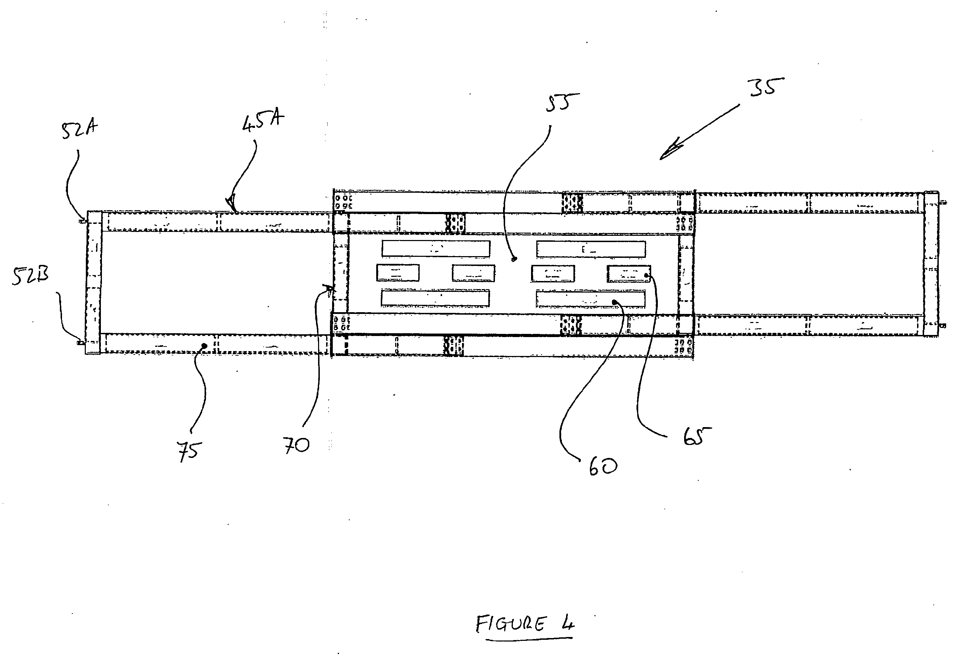

Figures 3 and 4 show details of one embodiment of the frame 35. Here the frame is constructed from extendable arms 45A and 45B in telescopic engagement with a central portion 40 such that the frame is selectively extendable through extending arms 45A and 45B to accommodate the length of the spreader to which the frame 35 is mounted. The frame itself, in this embodiment, is releasably engageable with the frame with brackets 52A and B which may be a bolted connection or through use of a shear pin whereby to disengage the frame 35 from a spreader 1 one merely requires withdrawal of the shear pin so as to replace the frame or, in any event, reduce the downtime of the spreader 1 should maintenance to the frame be required.

## Claims

1. A frame (35) for supporting a detection system (60, 65) whilst said frame (35) is attached to a spreader (1) for lifting container (5A, B), the frame comprising
attachment brackets (52A, B) for attaching the frame (35) to the spreader (1); and
at least one mounting bracket (55) for mounting the detection system (60, 65) to the frame (35),
**characterized in that** the frame (35) is not in contact with the container (5A, B) whilst mounted to the spreader (1); and wherein the frame is suspended from the spreader (1).

2. The frame (35) according to claim 1, wherein the frame (35) is adapted to fit wholly within a void (30) defined by the spreader (1) and the container (5A, B).

3. The frame (35) according to claim 1, further comprising a plurality of support brackets longitudinally along said frame (35).

4. The frame (35) according to claim 1, wherein frame (35) mounted adjacent extreme opposed ends of spreader (1).

5. The frame (35) according to claim 1, wherein the frame (35) spans the full length of the spreader (1).

6. The frame (35) according to claim 1, wherein the frame (35) is selectively extendable so as to accommodate extension of the spreader (1).

7. The frame (35) according to claim 1, wherein the frame (35) comprises parallel arms (50A, B) connected through at least one lateral connection member.

8. The frame (35) according to claim 7, wherein the at least one lateral connection member includes at least one platform (55) used to support at least a portion of the detection system (60, 65).

9. The frame (35) according to claim 7 or 8, wherein the frame (35) comprises three lateral connection members, one of which is a platform (55) for mounting detection system (60, 65) to.

10. The frame (35) according to claim 6, wherein the selectively extendable frame (35) includes telescopic arms (45A, B).

11. The frame (35) according to claim 6, wherein the selectively extendable frame (35) includes nested arms (45A, B).

12. The frame (35) according to claim 6, wherein the selectively extendable frame (35) includes arms having fixed extendable portions (45A, B), extendable portions mounted adjacent/parallel to corresponding fixed portions (50A, B).

13. The frame (35) according to claim 7, wherein the arms comprise open channel sections, with open portion directed upwards.

14. The frame (35) according to claim 13, wherein said open channels adapted to receive detection system (60, 65).

15. The frame (35) according to claim 1, wherein said mounting brackets (55) are attached to the spreader (1) using any one or a combination of bolted connection, welded connection or shear pin.

16. The frame (35) according to claim 1, wherein the spreader (1) is adapted to lift more than one container (5A, B).

17. A container detection assembly comprising
a spreader (1) for engaging and lifting container (5A, 5B);
a frame (35) for supporting a detection system (60, 65), said frame (35) attached to the spreader (1) so as to be not in contact with the container (5A, 5B);
wherein the frame (35) is according to any one of claims 1 to 16.

## Patentansprüche

1. Rahmen (35) für das Tragen eines Erfassungssystems (60, 65), während der Rahmen (35) an einem Anschlagrahmen (1) für Hubcontainer (5A, B) befestigt ist, wobei der Rahmen aufweist:
Befestigungshalterungen (52A, B) für das Befestigen des Rahmens (35) am Anschlagrahmen (1); und
mindestens eine Montagehalterung (55) für das Montieren des Erfassungssystems (60, 65) am Rahmen (35),
**dadurch gekennzeichnet, dass** der Rahmen (35) nicht mit dem Container (5A, B) in Kontakt ist, während er am Anschlagrahmen (1) montiert ist; und wobei der Rahmen vom Anschlagrahmen (1) herabhängt.

2. Rahmen (35) nach Anspruch 1, bei dem der Rahmen (35) so ausgebildet ist, dass er vollständig in einen Hohlraum (30) passt, der vom Anschlagrahmen (1) und dem Container (5A, B) definiert wird.

3. Rahmen (35) nach Anspruch 1, der außerdem eine Vielzahl von Stützhalterungen in Längsrichtung entlang des Rahmens (35) aufweist.

4. Rahmen (35) nach Anspruch 1, bei dem der Rahmen (35) angrenzend an die äußersten entgegengesetzten Enden des Anschlagrahmens (1) montiert ist.

5. Rahmen (35) nach Anspruch 1, bei dem der Rahmen (35) die volle Länge des Anschlagrahmens (1) überspannt.

6. Rahmen (35) nach Anspruch 1, bei dem der Rahmen (35) selektiv ausziehbar ist, um so die Ausdehnung des Anschlagrahmens (1) zu ermöglichen.

7. Rahmen (35) nach Anspruch 1, bei dem der Rahmen (35) parallele Arme (50A, B) aufweist, die durch mindestens ein seitliches Verbindungselement verbunden sind.

8. Rahmen (35) nach Anspruch 7, bei dem das mindestens eine seitliche Verbindungselement mindestens eine Plattform (55) umfasst, die benutzt wird, um mindestens einen Abschnitt des Erfassungssystems (60, 65) zu tragen.

9. Rahmen (35) nach Anspruch 7 oder 8, bei dem der Rahmen (35) drei seitliche Verbindungselemente aufweist, von denen eines eine Plattform (55) für das Montieren des Erfassungssystems (60, 65) daran ist.

10. Rahmen (35) nach Anspruch 6, bei dem der selektiv ausziehbare Rahmen (35) teleskopische Arme (45A, B) umfasst.

11. Rahmen (35) nach Anspruch 6, bei dem der selektiv ausziehbare Rahmen (35) ineinander gesteckte Arme (45A, B) umfasst.

12. Rahmen (35) nach Anspruch 6, bei dem der selektiv ausziehbare Rahmen (35) Arme mit befestigten ausziehbaren Abschnitten (45A, B) umfasst, wobei ausziehbare Abschnitte benachbart/parallel zu den entsprechenden befestigten Abschnitten (50A, B) montiert sind.

13. Rahmen (35) nach Anspruch 7, bei dem die Arme offene Kanalabschnitte aufweisen, wobei der offene Abschnitt nach oben gerichtet ist.

14. Rahmen (35) nach Anspruch 13, bei dem die offenen Kanäle ausgebildet sind, um das Erfassungssystem (60, 65) aufzunehmen.

15. Rahmen (35) nach Anspruch 1, bei dem die Montagehalterungen (55) am Anschlagrahmen (1) bei Verwendung irgendeiner von Schraubenverbindung, Schweißverbindung oder Scherstift oder einer Kombination davon befestigt sind.

16. Rahmen (35) nach Anspruch 1, bei dem der Anschlagrahmen (1) ausgebildet ist, um mehr als einen Container (5A, B) zu heben.

17. Containererfassungsbaugruppe, die aufweist:
einen Anschlagrahmen (1) für ein Ineingriffbringen mit dem Container (5A, 5B) und ein Heben dieses;
einen Rahmen (35) für das Tragen eines Erfassungssystems (60, 65), wobei der Rahmen (35) am Anschlagrahmen (1) so befestigt ist, dass er nicht mit dem Container (5A, 5B) in Kontakt kommt;
wobei der Rahmen (35) nach einem der Ansprüche 1 bis 16 ausgeführt ist.

## Revendications

1. Bâti (35) pour supporter un système de détection (60, 65), ledit bâti (35) étant fixé sur un palonnier (1) pour un conteneur de levage (5A, B), le bâti comprenant :
des consoles de fixation (52A, B) pour fixer le bâti (35) sur le palonnier (1) ; et
au moins une console de montage (55) pour monter le système de détection (60, 65) sur le bâti (35) ;
**caractérisé en ce que** le bâti (35) n'est pas en contact avec le conteneur (5A, B) lorsqu'il est monté sur le palonnier (1) ; et dans lequel le bâti est suspendu au palonnier (1).

2. Bâti (35) selon la revendication 1, dans lequel le bâti (35) est adapté pour être ajusté entièrement dans un vide (30) défini par le palonnier (1) et le conteneur (5A, B).

3. Bâti (35) selon la revendication 1, comprenant en outre plusieurs consoles de support agencées longitudinalement le long dudit bâti (35).

4. Bâti (35) selon la revendication 1, dans lequel le bâti (35) est monté de manière adjacente aux extrémités opposées extrêmes du palonnier (1).

5. Bâti (35) selon la revendication 1, dans lequel le bâti (35) s'étend sur l'ensemble de la longueur du palonnier (1).

6. Bâti (35) selon la revendication, dans lequel le bâti (35) peut être étendu de manière sélective, de sorte à permettre l'extension du palonnier (1).

7. Bâti (35) selon la revendication 1, dans lequel le bâti (35) comprend des bras parallèles (50A, B) connectés par l'intermédiaire d'au moins un élément de connexion latéral.

8. Bâti (35) selon la revendication 7, dans lequel le au moins un élément de connexion latéral englobe au moins une plate-forme (55) servant à supporter au moins une partie du système de détection (60, 65).

9. Bâti (35) selon les revendications 7 ou 8, dans lequel le bâti (35) comprend trois éléments de connexion latéraux, l'un étant constitué par une plate-forme (55) pour y monter le système de détection (60, 65).

10. Bâti (35) selon la revendication 6, dans lequel le bâti à extension sélective (35) englobe des bras télescopiques (45A, B).

11. Bâti (35) selon la revendication 6, dans lequel le bâti à extension sélective (35) englobe des bras imbriqués (45A, B).

12. Bâti (35) selon la revendication 6, dans lequel le bâti à extension sélective (35) englobe des bras comportant des parties extensibles fixes (45A, B), les parties extensibles étant montées de manière adjacente/parallèle aux parties fixes correspondantes (50A, B).

13. Bâti (35) selon la revendication 7, dans lequel les bras comprennent des sections de canal ouvertes, la partie ouverte étant dirigée vers le haut.

14. Bâti (35) selon la revendication 13, dans lequel lesdits canaux ouverts sont adaptés pour recevoir le système de détection (60, 65).

15. Bâti (35) selon la revendication 1, dans lequel lesdites consoles de montage (55) sont fixées sur le palonnier (1) par l'intermédiaire d'une connexion par boulons, d'une connexion par soudage, d'une goupille de cisaillement ou d'une combinaison de ces moyens.

16. Bâti (35) selon la revendication 1, dans lequel le palonnier (1) est adapté pour soulever plus d'un conteneur (5A, B).

17. Assemblage de détection pour un conteneur, comprenant :
un palonnier (1) destiné à s'engager dans le conteneur et à le soulever (5A, 5B) ;
un bâti (35) pour supporter un système de détection (60, 65), ledit bâti (35) étant fixé sur le palonnier (1) se sorte à ne pas être en contact avec le conteneur (5A, 5b) ;
dans lequel le bâti (35) est conforme à l'une quelconque des revendications 1 à 16.
